# EUROPÄISCHE PATENTSCHRIFT

(11) **EP 1 144 230 B1**
(45) Veröffentlichungstag und Bekanntmachung des Hinweises auf die Patenterteilung: **07.06.2006**
(21) Anmeldenummer: 00943642.9
(22) Anmeldetag: 25.05.2000
(51) Int. Cl.: B60S 1/04

(54) **WISCHERANLAGE**
WIPER SYSTEM
SYSTEME D'ESSUIE-GLACE

(30) Priorität: 02.06.1999 DE 19925292
(43) Veröffentlichungstag der Anmeldung: 17.10.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/001695
(87) Internationale Veröffentlichungsnummer: WO 2000/073107

(56) Entgegenhaltungen:
- EP-A- 0 704 356
- DE-A- 2 920 899
- DE-A- 19 540 869
- DE-A- 19 744 378
- US-A- 5 396 681

## Beschreibung

### Stand der Technik

Die Erfindung geht von einer Wischeranlage nach dem Oberbegriff des Anspruchs 1 aus, die schon aus der DE-A-195 40 869 bekannt ist.

Eine Platine bzw. eine Rohrplatine - wenn der Wischerträger auch aus Rohren besteht -, wird in Kraftfahrzeugen eingesetzt, um Wischeranlagen an der Karosserie des Kraftfahrzeugs zu befestigen. Die Platine umfaßt eine Motorplatine, die einen Wischerantrieb mit einem Wischermotor und einem daran angebauten Getriebe trägt. Eine Abtriebswelle des Getriebes _ ist in einem Getriebedom gelagert und treibt in der Regel über eine Kurbel und Gelenkstangen weitere Kurbeln an, die mit einer Antriebswelle für jeden Scheibenwischer fest verbunden sind. Die Antriebswellen der Scheibenwischer sind in Wischerlagern gelagert, deren Lagergehäuse an den Enden der Platine befestigt oder angeformt sind. Die Platine positioniert den Wischerantrieb zu den Wischerlagern.

Aus der DE-U-74 34 119 ist eine Rohrplatine bekannt, die aus einem Vierkantrohr hergestellt ist, an das eine als Motorplatine dienende Platte angeschweißt ist. An den Enden des Vierkantrohrs ist jeweils ein Wischerlager fixiert. Das Wischerlager wird über Ansätze am Lagergehäuse durch Schrauben oder durch Taumelnietung am Platinenrohr befestigt. Ferner kann der Ansatz leicht konisch sein und das Platinenrohr durch Preßsitz gehalten werden. Derartige Rohrplatinen oder Rohrrahmenanlagen sind trotz einer leichten Bauweise sehr stabil. Aus Kostengründen wird ein gerades Trägerrohr angestrebt, das keinen Vorbiegearbeitsgang erfordert.

Eine andere Rohrplatine ist aus der DE-C-29 20 899 bekannt, wobei in das Hohlprofil des Platinenrohrs Ansätze des Lagergehäuses eingeschoben werden. Die Ansätze liegen wenigstens teilweise an den Wandungen des Platinenrohrs an und weisen wenigstens eine Aussparung auf, in die Abschnitte des Platinenrohrs eingedrückt sind, um eine formschlüssige Verbindung zwischen dem Platinenrohr und dem Ansatz zu bilden. Durch die Aussparung wird das Wischerlager nicht nur axial zum Ansatz gesichert, sondern im Falle eines runden Querschnitts auch gegen Verdrehen im Platinenrohr. Wird das Platinenrohr aus einem Vierkantrohr oder einem Rohrprofil mit einem sonstigen, unrunden Querschnitt hergestellt, ist die Position des Wischerlagers bereits vor der Montage durch das jeweilige Profil festgelegt. Bei einem kreiszylindrischen Rohrprofil dagegen läßt sich die Position noch bei der Montage bestimmen.

In der EP-A-0 781 691 A1 wird ein Wischerlager beschrieben, dessen Gehäuse einen zylindrischen Anschluß für ein Platinenrohr besitzt. Zusätzlich sind mehrere Befestigungselemente angeformt.

Es ist ferner aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstükken bekannt. Dieses Verfahren, das vor allem für die Kraftfahrzeugindustrie verwendet wird, arbeitet mit hohen Drücken.

Das umzuformende Rohrstück wird in ein geteiltes Werkzeug gelegt, in das die gewünschte Werkstückform eingearbeitet ist.
Das Werkzeug, das in einer Presse montiert ist, wird durch einen vertikal arbeitenden Pressenstößel zusammengehalten.
Die Rohrstückenden werden durch Schließwerkzeuge geschlossen, durch die ein Druckmedium zugeführt wird, das die Rohrwandungen gegen die innere Werkzeugform presst. Dabei wird von horizontal wirkenden Stößeln ein axialer Druck auf das Rohr aufgebracht, der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt.

Aus der DE-A-195 40 869 ist eine Wischeranlage mit einem Platinenrohr bekannt, das mindestens an einem Ende mit einem Ansatz eines Lagergehäuses eines Wischerlagers fest verbunden ist. Das Platinenrohr umfasst den Ansatz des Lagergehäuses nach Art einer Muffe und ist im Verbindungsbereich im Wesentlichen zylindrisch mit einem vergrößerten Durchmesser. Der Übergang zwischen dem Platinenrohr mit dem geringeren Durchmesser und dem Verbindungsbereich mit dem größeren Durchmesser verläuft konisch.

### Vorteile der Erfindung

Erfindungsgemäß sind am Lagergehäuse seitliche Versteifungsrippen vorgesehen, die an den Ansatz und an das Halteelement anschließen.Die Versteifungsrippen unterstützen eine sehr stabile, torsionssteife Anbindung des Ansatzes an das Lagergehäuse, die schon durch den vergrößerten Querschnitt des Platinenrohrs begünstigt ist, indem die spezifische Belastung in dem kritischen Verbindungsbereich stark reduziert und damit die Biege- und Torsionssteifigkeit erhöht wird. Dies ist besonders wichtig, damit sich die Führung und der Anstellwinkel des Wischblatts zur Fahrzeugscheibe unter dem Einfluss der Belastung während des Betriebs nicht oder nur geringfügig verändern. Je nach Betriebssituation können sehr unterschiedlich große Kräfte auftreten, z.B. bei starkem Regen, bei trockener Scheibe oder bei Blockierfällen, wenn das Wischblatt durch die Schneelast blockiert wird. Im letztgenannten Fall können die Kräfte mehr als den zwanzigfachen Betrag der Kräfte im Normalbetrieb erreichen. Verändert sich unter der Belastung der Anstellwinkel des Wischblatts zur Scheibe, wird die Wischqualität sehr beeinträchtigt. Schließlich treten hohe Belastungen auf, wenn der Wischarm von der Antriebswelle gelöst wird, da die übliche Konusverbindung in der Regel nur schwer lösbar ist, so dass zur Demontage erhebliche Kräfte aufgebracht werden müssen, die die Einstellparameter verändern können.

Der vergrößerte Querschnitt beschränkt sich zweckmäßigerweise auf den Verbindungsbereich, so dass im Übrigen das Platinenrohr mit einem deutlich geringeren Querschnitt gefertigt ist.

Dadurch wird Gewicht und Material eingespart und der beanspruchte Bauraum verringert. Ferner wird die Biege- und Torsionssteifigkeit des Platinenrohrs mit dem kleineren Grundquerschnitt nicht vergrößert, so dass im Blockierfall die Spitzenbelastung der restlichen Bauteile, auch des Wischarms, durch eine elastische Verformung des Platinenrohrs reduziert wird. Dabei bleibt die hohe Festigkeit und Steifigkeit in den Verbindungsbereichen erhalten, so dass die eingestellte Position des Wischerlagers unverändert bleibt, insbesondere wenn an das Lagergehäuse Halteelemente zum Befestigen an der Fahrzeugkarosserie angeformt sind.

Durch die größere Formsteifigkeit der Verbindungsbereiche können leichtere Werkstoffe für das Wischerlager eingesetzt werden, z.B. Aluminium, Magnesium oder Kunststoffe, die nicht faserverstärkt sind. Neben einer Gewichtsersparnis bieten diese Werkstoffe Vorzüge bezüglich der Verarbeitung. Allerdings sind auch faserverstärkte Kunststoffe anwendbar.

Ferner ergibt sich aufgrund des größeren Querschnitts im Verbindungsbereich ein größerer Fügedurchmesser, so daß sich die Kontaktflächen zwischen dem Platinenrohr und dem Ansatz ebenfalls vergrößern. Es ist daher möglich, daß sich die beiden Bauteile weniger überlappen und damit der Verbindungsbereich bei gleicher Größe der Kontaktfläche kürzer wird.

Der Querschnitt des Platinenrohrs kann in vielfältiger Weise vergrößert werden. Es ist zweckmäßig, das Ende des Platinenrohrs durch Tiefziehen oder durch ein Innenhochdruckverfahren aufzuweiten. Durch die Kaltverformung über die Fließgrenze des Materials erhält dieses eine höhere Festigkeit. Mit dem Umformverfahren lassen sich für den Verbindungsbereich Querschnittprofile erzeugen, die von den Querschnittprofilen des übrigen Platinenrohrs abweichen. Dabei ist es zweckmäßig, einen länglichen Querschnitt zu verwenden, dessen längste Achse in Richtung der Antriebswelle liegt. Dadurch werden die Bauteile in Umfangsrichtung formschlüssig gekoppelt. Die Abstützung von Drehmomenten ist somit von der Aufnahme axial wirkender Kräfte getrennt, so daß die axiale Sicherung der Bauteile zueinander entlastet ist und einfacher gestaltet werden kann.

Das Platinenrohr wird in vorteilhafter Weise durch Verkrimpen am Ansatz befestigt, indem Teile des Platinenrohrs in Ausnehmungen des Ansatzes eingedrückt werden. Aufgrund des großen Durchmessers im Verbindungsbereich können die Ausnehmungen so gestaltet werden, daß größere Schrägen bzw. Radien am Bauteil möglich sind. Dies begünstigt die Gestaltung des Bauteils bezüglich seiner Festigkeit und die Verprägestempelgeometrie. Ferner wird das Fließverhalten des Rohmaterials beim Verprägen verbessert, wodurch die Rißgefahr verringert wird, da Werkstoffehler bzw. eine Schweißnaht im Rohmaterial weniger kritisch sind.

Bei einer Ausgestaltung der Erfindung ist der Ansatz des Lagergehäuses um das aufgeweitete Ende des Platinenrohrs gegossen oder gespritzt. Auch hier können runde oder rechteckige Querschnitte verwendet werden, die konstant bleiben oder sich zum Wischerlager hin vergrößern. Am Querschnittübergang zum aufgeweiteten Ende befindet sich eine Stufe, die umspritzt ist und in Verbindung mit dem Ende des Platinenrohrs als axialer Formschluß wirkt. Weitere Arbeitsgänge zum Befestigen entfallen.

Da bei dieser Ausführung der Ansatz des Lagergehäuses einen größeren Durchmesser aufweist als das Platinenrohr, sind die Spannungen im Lagergehäuse weiter reduziert und es kann aus einem leichteren, wenngleich elastischeren Werkstoff hergestellt werden, wie beispielsweise Leichtmetalle oder unverstärkte Kunststoffe mit guten Gleiteigenschaften für den Lagerbereich. Unverstärkte Kunststoffe sind einfacher zu verarbeiten als Kunststoffe, die durch Glasfasern oder Kohlefasern verstärkt sind. Sie sind insbesondere für das Umspritzen des Platinenrohrs geeignet. Aufgrund der vergrößerten Querschnitte im Verbindungsbereich ist trotzdem die erforderliche Steifigkeit gewährleistet.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: einen Teil einer erfindungsgemäßen Wischeranlage mit einem Platinenrohr in perspektivischer Ansicht,
- Fig. 2: einen Querschnitt des Platinenrohrs entsprechend einer Linie II-II in Fig. 1,
- Fig. 3-4: Varianten zu Fig. 2,
- Fig. 5: eine Seitenansicht eines Lagergehäuses mit einem angeschlossenen Platinenrohr im Schnitt und
- Fig. 6-8: Varianten zu Fig. 5.

### Beschreibung der Ausführungsbeispiele

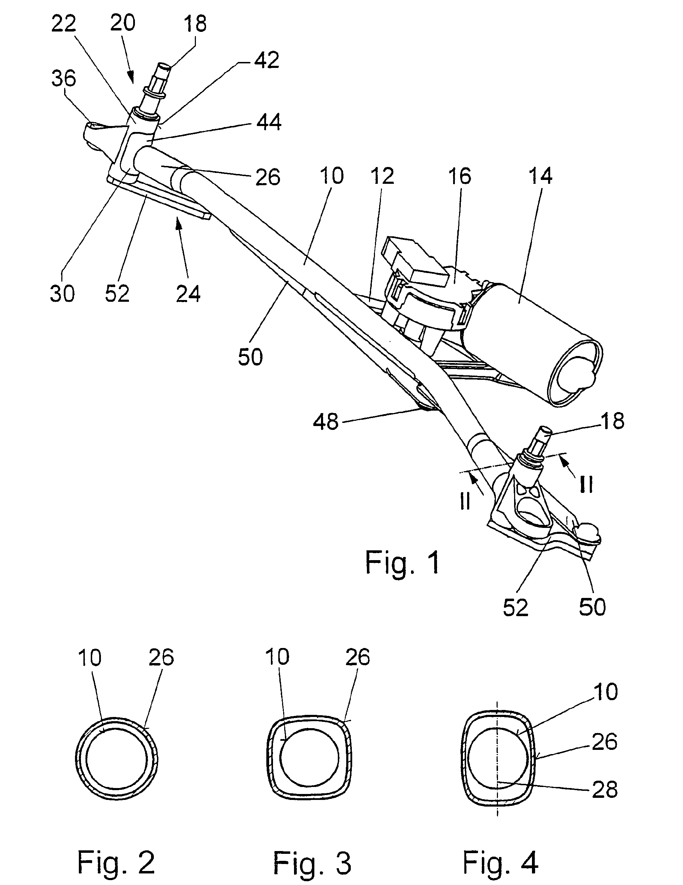

Ein Wischerträger, eine sogenannte Rohrplatine, besitzt ein Platinenrohr 10. Dieses trägt eine Motorplatine 12 mit einem Motor 14 und einem daran angebauten Getriebe 16, dessen Abtriebswelle über eine Kurbel 48 und Gelenkstangen 50 weitere Kurbeln 52 antreibt, die jeweils mit einer Antriebswelle 18 für jeden Scheibenwischer fest verbunden sind (Fig. 1). Die Antriebswellen 18 sind in Wischerlagern 20 gelagert, deren Lagergehäuse 22 Ansätze 30, 40 aufweisen, die mit den Enden des Platinenrohrs 10 zusammengesteckt und fixiert sind.

Die beiden Enden des Platinenrohrs 10 sind im Verbindungsbereich 24 aufgeweitet, so daß ein vergrößerter Querschnitt 26 für die Verbindung entsteht. Das Aufweiten kann mittels Ziehstufen oder dem Innenhochdruckverfahren hergestellt werden. Dabei wird der Kreisquerschnitt des Platinenrohrs 10 konzentrisch vergrößert oder ein für die Belastung günstigerer, im wesentlichen quadratischer oder rechteckiger Querschnitt angeformt. Durch ein von der Kreisform abweichendes Querschnittprofil wird ein Formschluß in Umfangsrichtung hergestellt, der die Winkellage der Lagergehäuse 22 zur Motorplatine 12 festlegt. Aufgrund des Kaltverformens des Platinenrohrs 10 im Verbindungsbereich 24 erhält das Material eine größere Festigkeit.

Fig. 2 zeigt einen Verbindungsbereich 24 mit einem kreisförmigen Querschnitt 26, der den Vorteil hat, daß der einzufügende Ansatz 30 während der Montage nachjustiert werden kann, bevor er durch Verkrimpen fixiert wird. In Fig. 3 ist ein quadratischer Querschnitt dargestellt, während Fig. 4 einen vergrößerten, rechteckigen Querschnitt 26 zeigt. Bei länglichen Querschnittformen, die auch oval sein können und in Umfangsrichtung einen Formschluß ergeben, liegt die längste Achse 28 in Richtung der Antriebswelle 18; denn dadurch ergibt sich eine sehr stabile, torsionssteife Anbindung des Ansatzes 30, 40 an das Lagergehäuse 22. Diese kann durch seitliche Versteifungsrippen 34 noch unterstützt werden, die in ihren Verlängerungen an einem Halteelement 36 des Lagergehäuses 22 anschließen.

Das Halteelement 36 und der Ansatz 30 befinden sich ungefähr gegenüberliegend an der Außenkontur 42 des Lagergehäuses 22. Der Ansatz 30 weist an seinem der Antriebswelle 18 zugewandten Ende eine vergrößerte Übergangsfläche 44 auf, die mit großen Radien in die Umfangsfläche des Ansatzes 30 übergeht, wodurch eine günstige Kraftübertragung erreicht wird.

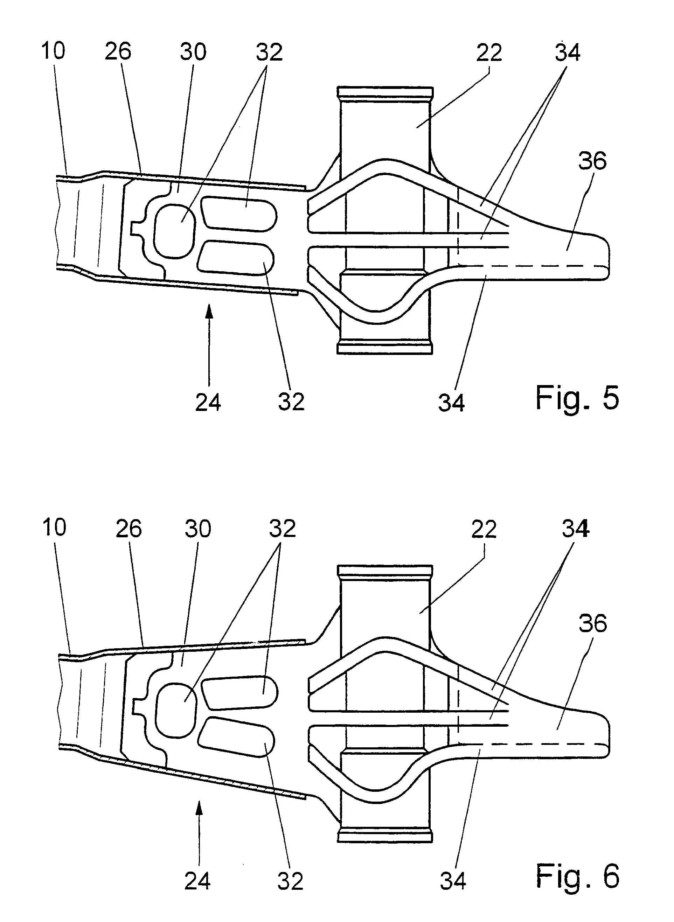

Bei der Ausführung nach Fig. 1 bis 6 ist der Ansatz 30 in das Ende des Platinenrohrs 10 eingefügt oder eingepreßt und mit diesem verkrimpt, indem Teile des Platinenrohrs 10 in Ausnehmungen 32 eingedrückt werden. Dabei kann der Ansatz 30 im Verbindungsbereich 24 eine zylindrische oder quaderförmige Gestalt haben (Fig. 1 bis 5). Zur verbesserten Kraftübertragung sieht eine Variante nach Fig. 6 vor, daß der vergrößerte Querschnitt 26 des Platinenrohrs 10 und der entsprechende Querschnitt des eingefügten Ansatzes 30 im Verbindungsbereich 24 zum Wischerlager 20 hin zunimmt.

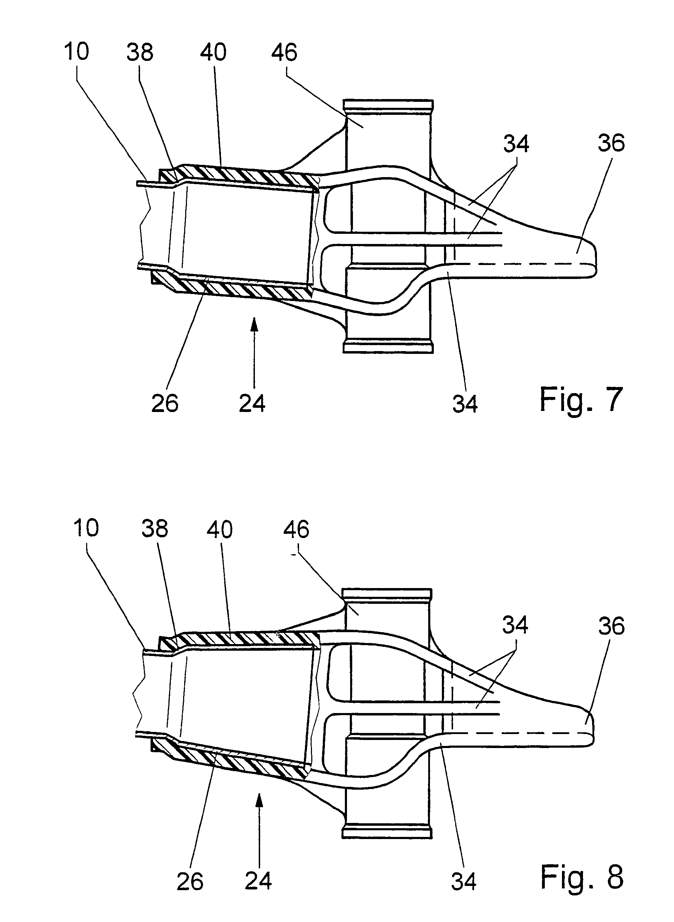

Der nach der Erfindung verstärkte, formsteife Verbindungsbereich 24 ermöglicht auch die Verwendung leichter, elastischer Werkstoffe, wie Aluminium, Magnesium oder Kunststoff, für das Wischerlager 20. Diese Werkstoffe lassen sich gut verarbeiten und haben gute Gleiteigenschaften. So läßt sich das Lagergehäuse 22, 46 durch Spritzgießen herstellen. Die Varianten nach Fig. 7 und Fig. 8 unterscheiden sich von den zuvor beschriebenen Varianten nur dadurch, daß der Ansatz 40 rohrförmig ausgebildet ist und das Platinenrohr 10 umfaßt. Eine Stufe 38 am Querschnittübergang zum vergrößerten Querschnitt 26 wirkt mit dem Ende des Platinenrohrs 10 als axiale Fixierung, indem der Ansatz 40 sie übergreift. Das Platinenrohr 10 kann bei der Herstellung des Lagergehäuses 46 umspritzt werden. Aber auch später kann der Ansatz 40 im Bereich der Stufe 38 bei der Montage verstemmt oder durch eine Wärmebehandlung im Falle eines Kunststoffs geschrumpft werden.

## Patentansprüche

1. Wischeranlage mit einem Platinenrohr (10), das mindestens an einem Ende mit einem Ansatz (30, 40) eines Lagergehäuses (22, 46) eines Wischlagers (20) fest verbunden ist und im Verbindungsbereich (24) einen vergrößerten Querschnitt (26) aufweist, wobei an dem Lagergehäuse (22, 46) ein Halteelement (36) angeformt ist, **dadurch gekennzeichnet, dass** am Lagergehäuse (22, 46) seitliche Versteifungsrippen (34) vorgesehen sind, die an den Ansatz (30, 40) und an das Halteelement (36) anschließen.

2. Wischeranlage nach Anspruch 1, **dadurch gekennzeichnet, dass** der Querschnitt (26) des Platinenrohrs (10) und des Ansatzes (30, 40) im Verbindungsbereich (24) zum Wischerlager (20) hin zunimmt.

3. Wischeranlage nach Anspruch 1, **dadurch gekennzeichnet, dass** das Platinenrohr (10) einen länglichen Querschnitt (26) aufweist, dessen längste Achse (28) in Richtung der Lagerachse liegt.

4. Wischeranlage nach Anspruch 1, **dadurch gekennzeichnet, dass** der Ansatz (30) in das Platinenrohr (10) eingepresst und mit diesem verkrimpt ist.

5. Wischeranlage nach einem der Ansprüche 1 bis 3, **dadurch gekennzeichnet, dass** der Ansatz (40) rohrförmig ausgebildet ist und das Platinenrohr (10) umfasst.

6. Wischeranlage nach Anspruch 5, **dadurch gekennzeichnet, dass** das Platinenrohr (10) im Verbindungsbereich (24) eine Stufe (38) aufweist.

7. Wischeranlage nach Anspruch 5, **dadurch gekennzeichnet, dass** der Ansatz (40) um das Platinenrohr (10) gegossen oder gespritzt ist.

8. Wischeranlage nach Anspruch 5, **dadurch gekennzeichnet, dass** das Platinenrohr (10) im Verbindungsbereich (24) durch Kaltverformen aufgeweitet ist.

9. Wischeranlage nach Anspruch 1, **dadurch gekennzeichnet, dass** das Platinenrohr (10) im Verbindungsbereich (24) durch Ziehstufen oder ein Innenhochdruckverfahren aufgeweitet ist.

## Claims

1. Wiper system having a sheet-blank tube (10) which is connected fixedly at least at one end to a projection (30, 40) of a bearing housing (22, 46) of a wiper bearing (20) and has an enlarged cross section (26) in the connecting region (24), a retaining element (36) being moulded onto the bearing housing (22, 46), **characterized in that** lateral reinforcing ribs (34) are provided on the bearing housing (22, 46), the said reinforcing ribs being connected to the projection (30, 40) and to the retaining element (36).

2. Wiper system according to Claim 1, **characterized in that** the cross section (26) of the sheet-blank tube (10) and of the projection (30, 40) increases towards the wiper bearing (20) in the connecting region (24).

3. Wiper system according to Claim 1, **characterized in that** the sheet-blank tube (10) has an elongated cross section (26) whose longest axis (28) lies in the direction of the bearing axis.

4. Wiper system according to Claim 1, **characterized in that** the projection (30) is pressed into the sheet-blank tube (10) and crimped to the latter.

5. Wiper system according to one of Claims 1 to 3, **characterized in that** the projection (40) is of tubular design and surrounds the sheet-blank tube (10).

6. Wiper system according to Claim 5, **characterized in that** the sheet-blank tube (10) has a step (38) in the connecting region (24).

7. Wiper system according to Claim 5, **characterized in that** the projection (40) is cast or injected around the sheet-blank tube (10).

8. Wiper system according to Claim 5, **characterized in that** the sheet-blank tube (10) is widened in the connecting region (24) by cold deformation.

9. Wiper system according to Claim 1, **characterized in that** the sheet-blank tube (10) is widened in the connecting region (24) by drawing stages or an internal high-pressure process.

## Revendications

1. Installation d'essuie-glace comportant un tube de platine (10) dont au moins une extrémité est reliée à un prolongement (30, 40) d'un boîtier de palier (22, 46) d'un palier d'essuie-glace (20) par une liaison solidaire et dans la zone de liaison (24) il a une section agrandie (26), le boîtier de palier (22, 46) formant un élément de fixation (36),
**caractérisée en ce que**
le boîtier de palier (22, 46) comporte des nervures de rigidification (34) latérales, reliant le prolongement (30, 40) et l'élément de fixation (36).

2. Installation d'essuie-glace selon la revendication 1,
**caractérisée en ce que**
la section (26) du tube de platine (10) et le prolongement (30, 40) augmentent dans la zone de liaison (24) avec le palier d'essuie-glace (20).

3. Installation d'essuie-glace selon la revendication 1,
**caractérisée en ce que**
le tube de platine (10) a une section longitudinale (26) dont le plus grand axe (28) est dans la direction de l'axe de palier.

4. Installation d'essuie-glace selon la revendication 1,
**caractérisée en ce que**
le prolongement (30) est enfoncé de force dans le tube de platine (10) pour être serti à celui-ci.

5. Installation d'essuie-glace selon l'une des revendications 1 à 3,
**caractérisée en ce que**
le prolongement (40) a une forme tubulaire entourant le tube de platine (10).

6. Installation d'essuie-glace selon la revendication 5,
**caractérisée en ce que**
le tube de platine (10) présente un épaulement (38) dans sa zone de liaison (24).

7. Installation d'essuie-glace selon la revendication 5,
**caractérisée en ce que**
le prolongement (40) est coulé ou injecté autour du tube de platine (10).

8. Installation d'essuie-glace selon la revendication 5,
**caractérisée en ce que**
le tube de platine (10) est élargi par déformation à froid dans la zone de liaison (24).

9. Installation d'essuie-glace selon la revendication 1,
**caractérisée en ce que**
le tube de platine (10) est élargi dans la zone de liaison (24) par étirage ou par déformation à haute pression interne.
